# EUROPEAN PATENT SPECIFICATION

(11) **EP 2 743 685 B1**
(45) Date of publication and mention of the grant of the patent: **20.05.2015**
(21) Application number: 12196560.2
(22) Date of filing: 11.12.2012
(51) Int. Cl.: G01N 21/952, G03G 21/00

(54) **Inspection Method, Inspection Apparatus and Computer Program**
Prüfungsverfahren, Prüfungsvorrichtung und Computerprogramm
Procédé d'inspection, programme informatique et appareil d'inspection

(43) Date of publication of application: 18.06.2014
(73) Proprietor: Ricoh Company Ltd., Tokyo 143-8555 (JP); Ricoh UK Products Limited, Telford, Shropshire TF2 9NS (GB)
(72) Inventor: Smith, Mark Anthony-Edward, Telford, Shropshire TF2 9NS (GB); Moule, David Jeffrey, Telford, Shropshire TF2 9NS (GB); Katsuji, Ogawa, Shropshire TF2 9NS (GB)
(74) Representative: Leeming, John Gerard

(56) References cited:
- EP-A1- 1 816 465
- JP-A- H0 763 687
- JP-A- 2004 144 612

## Description

The present invention relates to an inspection method, in particular a method for inspecting a used photoconductor from an image forming apparatus so that it can be refurbished and/or re-used. The present invention also relates to an apparatus for inspection and a computer program usable in the method and apparatus.

In a well known type of image forming apparatus an electrostatic latent image is formed on a charged photoconductor by exposing the photoconductor selectively to light. The charge on the surface of the photoconductor drains away in the parts that are illuminated. Toner is adhered to the electrostatic latent image and then transferred to a recording member, such as a paper sheet, or an image transfer body. A monochrome image forming apparatus generally comprises a single photoconductor on which a black toner image is formed. A multicolour image forming apparatus generally comprises four photoconductors on which respectively different coloured and black images are formed, the images being combined on the recording member or an image transfer body.

In an image forming apparatus using such a photoconductor, friction between the photoconductor, toner and the recording medium or image transfer body damages the surface of the photoconductor over time. Material, e.g. paper dust or components of the toner, also adheres to the surface of the photoconductor. The photoconductor therefore needs to be replaced periodically. In some cases the photoconductor is incorporated in a toner cartridge and is replaced whenever a new toner cartridge is filled. In other cases the photoconductor is provided in a photoconductor unit which is replaceable separately from a developer unit and toner can be independently refreshed.

In many cases, especially where the photoconductor is incorporated in a toner cartridge, the photoconductor will not have reached the end of its useable life when it is replaced. In that case, it is desirable, from a cost and environmental point of view, to be able to re-use the photoconductor rather than recycle it. However, to do that it is necessary to distinguish between photoconductors that are in a suitable condition for re-use and those which are not. It is known to visually inspect used photoconductors in order to determine whether or not they are suitable for re-use. However, visual inspection techniques can be time-consuming and are prone to variation by different inspectors and human error.

JP-A-2006-208,371 discloses an apparatus and automatic method for inspecting cylinders, in particular photoconductor drums. This method is able to detect bending of the cylinders and localised defects. However, it is not able to detect circumferential scratches, that is scratches around the circumference of the photoconductor drum perpendicular to its axis. Such scratches are common due to the rotation of the drum within an image forming apparatus and affect the performance of the photoconductor drum.

JP-A-2004-144,612 discloses a method of inspecting a drum during manufacture to detect shape defects by detecting the angle of a specular by reflected beam.

It is an aim of the present invention to provide a method for inspecting a photoconductor that can reliably detect and/or measure damage to the surface thereof.

According to the present invention, there is provided a method and apparatus for inspecting a photoconductor member as defined in the appended claims.

According to the present invention, there is provided a computer program for processing an image of a mask reflected in a photoconductor to derive a measurement of the specular reflectance thereof as defined in the appended claims.

The present invention will be further described below with reference to exemplary embodiments and the accompanying drawings, in which:
Figure 1 depicts an image forming apparatus according to an embodiment of the present invention
Figure 2 depicts the principle of operation of an inspection apparatus according to an embodiment of the present invention;
Figure 3 depicts an inspection apparatus according to an embodiment of the present invention;
Figure 4 depicts positions of measurements taken in an inspection method according to an embodiment of the present invention;
Figures 5 to 8 depict measurement images taken from photoconductors having different amounts of wear;
Figure 9 depicts a user interface of an inspection apparatus according to an embodiment of the present invention;
Figures 10 and 11 depict measurement images ofphotoconductor drums having particular forms of damage;
Figure 12 is a simulated measurement image illustrating the effects of point damage; and
Figure 13 illustrates a process for obtaining a measurement of reflectivity from a measurement image in an embodiment of the present invention.

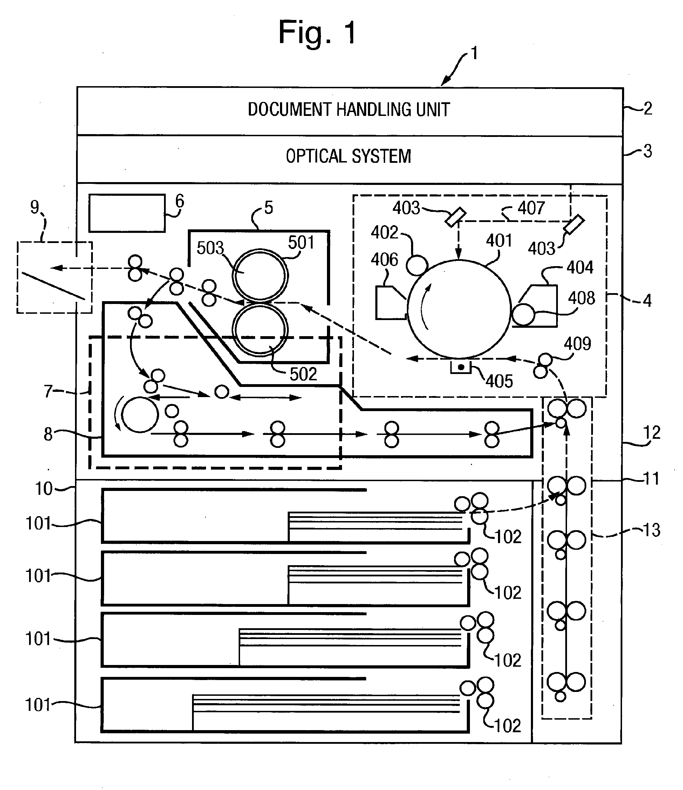

The configuration of an image forming apparatus 1 according to a first embodiment is shown in FIG. 1. The image forming apparatus 1 is tall so that a user can dispose it on the floor and use it comfortably. The image forming apparatus 1 is provided with the following:
- a document handling unit 2 for transporting documents;
- an optical system 3 for applying light to the document transported by the document handling unit 2 and reading images;
- an image forming unit 4 for transferring the image read by the optical system 3 to a recording member such as paper;
- a fixing unit 5 for fixing the transferred image to the recording member;
- a main power supply 6 for supplying electric power to the entire apparatus;
- a secondary power supply 7 charged by the main power supply 6 for supplying electric power to the fixing unit 5;
- a reversing unit 8 for reversing the front and back of the recording member when an image is transferred and fixed on the front and the back of the recording member;
- a discharging unit 9 for discharging the recording member on which the image has been fixed to an exterior;
- a paper feed unit 10 for storing recording members and feeding the recording members to the image forming unit 4;
- a partition plate 11 for partitioning internal space;
- a chassis 12 that covers the above components; and
- a transportation path 13 for transporting the recording member output by the paper feed unit 10 or the reversing unit 8 to the image forming unit 4.

The document handling unit 2, the optical system 3, the image forming unit 4, the fixing unit 5, the main power supply 6, the secondary power supply 7, the reversing unit 8, and the discharging unit 9 are disposed over the partitioning plate 11, and the paper feed unit 10 is provided under the partitioning plate 11. The partitioning plate 11 is parallel to the bottom face of the chassis 12. The partitioning plate 11 is made of resin, for example, as a part of the chassis 12.

The image forming unit 4 is provided with a photosensitive body 401 which is a drum-shaped rotative body. A charging roller 402, a mirror 403, a developing unit 404, a transferring unit 405, and a cleaning unit 406 are disposed around the outer periphery of the photosensitive body 401. When no light is applied to the photosensitive body 401, the charging roller 402 charges the surface of the photosensitive body 401 uniformly. The mirror 403 scans the charged photosensitive body 401 with exposure light 407, and forms an electrostatic latent image on the surface of the photosensitive body 401, the electrostatic latent image corresponding to an image to be formed on the recording member. The developing unit 404 forms a toner image by making the electrostatic latent image formed on the photosensitive body 401 visible using a developing roller 408. The transferring unit 405 transfers the toner image to a recording member such as paper by electric field. The cleaning unit 406 removes remaining toner that the transferring unit 405 left on the surface of the photosensitive body 401. The image forming unit 4 is provided with a resist roller 409. The resist roller 409 adjusts timing in which the recording member is transported so that the position of the toner image formed on the surface of the photosensitive body 401 and the position of the recording member match at the transferring unit 405. The recording member on which the toner image has been transferred by the transferring unit 405 is transported to the fixing unit 5.

The fixing unit 5 receives the recording member on which the toner image has been transferred, from the image forming unit 4. The fixing unit 5 fixes the toner image on the recording member, and then, discharges the recording member to the discharging unit 9. The fixing unit 5 is provided with a fuser roller 501 for heating the recording member and a pressure roller 502 for applying pressure to the recording member.

The paper feed unit 10 is provided with paper feed trays 101 and paper feed rollers 102. The paper feed trays 101 store recording members of multiple sizes by the size. The paper feed rollers 102 take out the recording member stored in the paper feed tray 101 and send it to the transportation path 13. The recording member is transported through the transportation path 13 to the resist roller 409.

After a period of use of such an image forming apparatus, the surface of the photoconductor drum 401 can become worn or damaged, in particular due to friction between it and the toner and the recording member.

The present inventors have determined that elongate scratches on the photoconductor, for example scratches around the circumference of a photoconductor drum such as may occur through use, noticeably reduce the specular reflectance of the surface of the photoconductor. By detecting and/measuring the specular reflectance of a photoconductor, damage through scratches can be detected and/or quantified.

In an embodiment of the present invention, an image of a mask with contrasting parts is viewed in reflection on the photoconductor and its contrast measured in order to detect the presence of scratches on the photoconductor. Desirably, the object image has a high contrast, that is has parts of high luminance and parts of low luminance where the difference between the luminance of the high parts and the luminance of the low luminance parts is as great as possible. In an embodiment the image is striped, having stripes of high luminance alternating with stripes of low luminance. Other shapes and patterns are of course possible, for example a checkerboard pattern or a pattern of chevrons.

In an embodiment of the invention, the measurement of specular reflectance of the photoconductor is obtained by measuring the average luminance difference between the high luminance parts and the low luminance parts of the captured image. A high contrast indicates a new or undamaged photoconductor whereas a low contrast indicates a worn or damaged photoconductor.

The present inventors have established that measured contrast in the captured image correlates strongly with the degree of wear or damage to the photoconductor drum and it is possible to set a threshold for contrast above which the photoconductor drum is suitable for re-use and below which it is not. In an embodiment of the invention, multiple thresholds are used to distinguish between photoconductors that are re-usable following remedial action such as polishing and those which are suitable only for scrap or recycling. In an embodiment, thresholds are set to determine the type or extent of remedial action to be carried out before the photoconductor is re-used.

In an embodiment of the invention, thresholds are set by performing test measurements on samples that are known to be good and/or known to be bad. In an embodiment of the invention, thresholds are determined on the basis of theoretical considerations, modelling or simulation.

The present inventors have determined that an automated test as described herewith can, in some cases at least, be carried out more quickly than a visual inspection by an operator. An automated method as described herein can alternatively or in addition be more reliable than a visual inspection. A quicker inspection is desirable as it is more efficient and reduces costs. Even in a case where an automated inspection is no quicker than a visual inspection, it can still save operator costs through reduction in the training required and the possibility of a single operator tending multiple inspection apparatus. Improvements in reliability of the determination of whether a photoconductor is suitable for re-use can save costs through a reduction in unnecessary rejections (false positives) and a reduction in erroneous passing of photoconductors which subsequently turn out to be faulty (false positives).

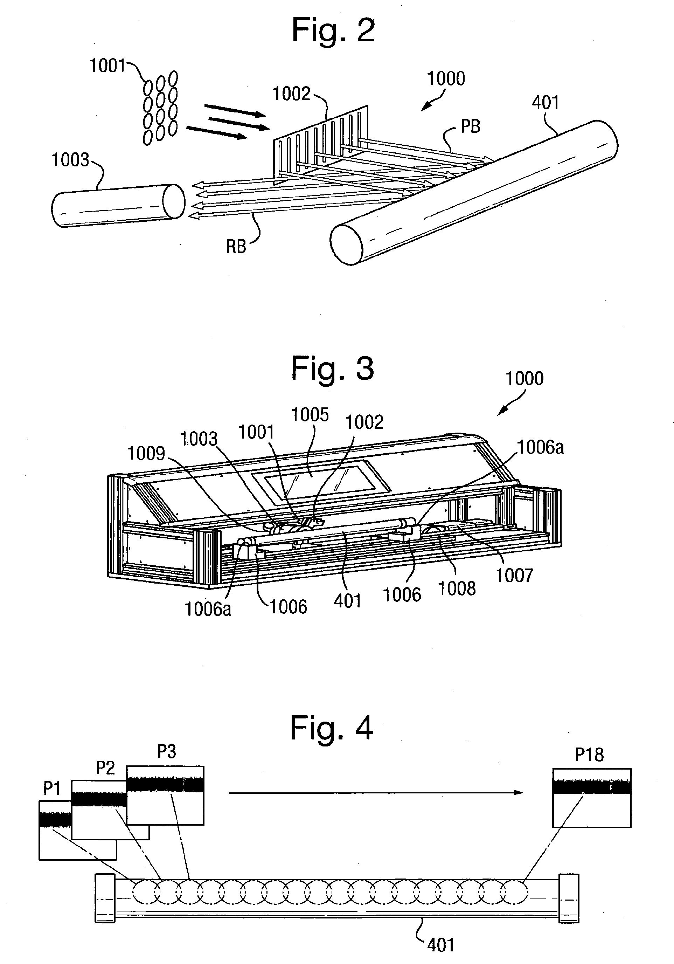

Figure 2 illustrates the principle of operation of an inspection apparatus 1000 according to an embodiment of the invention. A light source 1001, e.g. an LED array, illuminates a masking grid 1002. The masking grid 1002 comprises a plurality of parallel regions that are alternately opaque and at least partially transparent so as to form a high contrast, e.g. striped, image. In an embodiment the masking grid 1002 is an opaque sheet of material, e.g. metal, in which a plurality of apertures are formed. The radiation passing through masking grid 1002 forms a patterned beam PB which is directed onto a photoconductor 401 to be inspected. The surface of photoconductor 401 is at least partially reflective and a reflected beam RB of light is thereby formed. An imaging device 1003, e.g. a CCD or CMOS based camera, receives the reflective beam RB and captures and image of masking grid 1002 as reflected from the surface of photoconductor 401. The image captured by imaging device 1003 is processed, as discussed further below, to derive a signal indicative of the spectular reflectance of the surface of photoconductor 401 which is indicative of the amount of wear or damage that has occurred through use.

In an embodiment of the invention, the light source 1001 is an array of LEDs. The present invention does not require particularly high power light source to function and it is desirable that the power of the light source is sufficiently low as not to cause damage to the photoconductor. A fluorescent or incandescent light source can also be used. The output spectrum of the light source is, in an embodiment, selected to avoid frequencies that might damage the photoconductor, which would lead to a reduction in charge transport performance. In an embodiment the light source emits green light. In an embodiment of the invention, a filter is provided in the optical path between the light source 1001 and photoconductor 401 to filter out wavelengths that might be damaging to the photoconductor. Such filter is, in an embodiment, combined with masking grid 1002. Optical elements, not shown in the drawings, can be provided to collimate or focus the light output from light source 1001.

In an embodiment of the present invention, imaging device 1003 is a relatively low-cost camera having an image size of 480 pixels by 640 pixels. It is possible to use a camera having a higher resolution and both monochrome and colour cameras can also be used. If a colour camera is used one or more colour channels can be processed separately. Alternatively, the colour channels can be combined before processing. In an embodiment of the invention, a line-type sensor comprising a one-dimensional array of light sensitive elements is used.

The construction of inspection apparatus 1000 according to an embodiment of the invention is shown in more detail in Figure 3. As can there be seen, photoconductor 401 to be inspected is supported at each ends by carriages 1006 which from a holder for the photoconductor. Each carriage 1006 may be provided with a recess 1006a sized to accommodate the end flange of a photoconductor 401. Carriages 1006 are mounted on rails 1008 so as to be adjustable to accommodate photoconductors of different sizes. Light source 1001, masking grid 1002 and imaging device 1003 form an optical unit which is mounted on reciprocating carriage 1009 which is driven by motor 1007 so that measurements can be taken at a plurality of positions along the axial length of photoconductor 401.

The inventors have determined that scratching damage to the photoconductor is generally uniform about its circumference so that there is no need to make measurements at different positions around the circumference of the photoconductor in order to detect scratching damage. However, if it is desired to detect other forms of damage, a motor and suitable mounts for the photoconductor 401 are provided to allow it to be rotated relative to the light source 1001 and camera 1003.

In an embodiment, the optical components, that is light source 1001, camera 1003 and masking grid 1002, are fixed in position and the photoconductor is mounted on a reciprocating carriage so that it is moved to enable measurements at multiple positions along the length of the photoconductor. In an embodiment, both the photoconductor and optical components are moveable.

In an embodiment, both the optical components and photoconductor are fixed in position. Such an arrangement can be useful where measurement of a single region is found sufficient to distinguish between re-usable and non-re-usable photoconductors. Such an arrangement can also be used if imaging device 1003 has a wide field of view and a high resolution so as to be able to image all or a substantial part of the photoconductor 401 in a single exposure. In an embodiment, multiple sets of optical components are provided and a plurality of measurement images are taken in parallel.

The operation of inspection apparatus 1000 is controlled by controller 1005. Controller 1005, in an embodiment, takes the form of a general purpose computer or general purpose process controller equipped with suitable software. Controller 1005 may alternatively be constructed as a dedicated control circuit. Controller 1005 includes a display and input means. The display and input means can be separate or can be combined as a touch-sensitive screen. The controller can be configured to commence operatives automatically in response to the placing of a photoconductor on the carriages 1006 or the closing of a door.

Controller 1005 includes an image processor to process images captured by imaging device 1003 to derive therefrom values, e.g. average values, indicative of the intensities of parts of the image corresponding to bright and dark parts of the mask. The controller 1005 also includes a comparator for comparing the values derived by the image processor with each other and/or with reference values.

In an embodiment, a robot arm is provided to load photoconductors into carriages 1006. In another embodiment, photoconductors 401 are loaded onto carriages 1006 by hand.

Figure 4 illustrates an arrangement of inspection regions at which measurement images are taken in an embodiment of the invention. As shown, a plurality of images are taken at positions P1-P18 along the length of the photoconductor 401 so as to cover substantially its entire length. In this example 18 images are taken but more or fewer images may be taken depending upon the field of view and resolution of the imaging device 1003 and the length of the photoconductor 401 to be tested. As shown in Figure 4, the measuring regions corresponding to the measurement images taken overlap. In another embodiment, the measurement regions are spaced apart. In an embodiment of the invention, the measurement regions encompass all or substantially all of the length of the photoconductor. In another embodiment measurements are taken only at regions where it is found that wear or damage to the photoconductor is most prevalent.

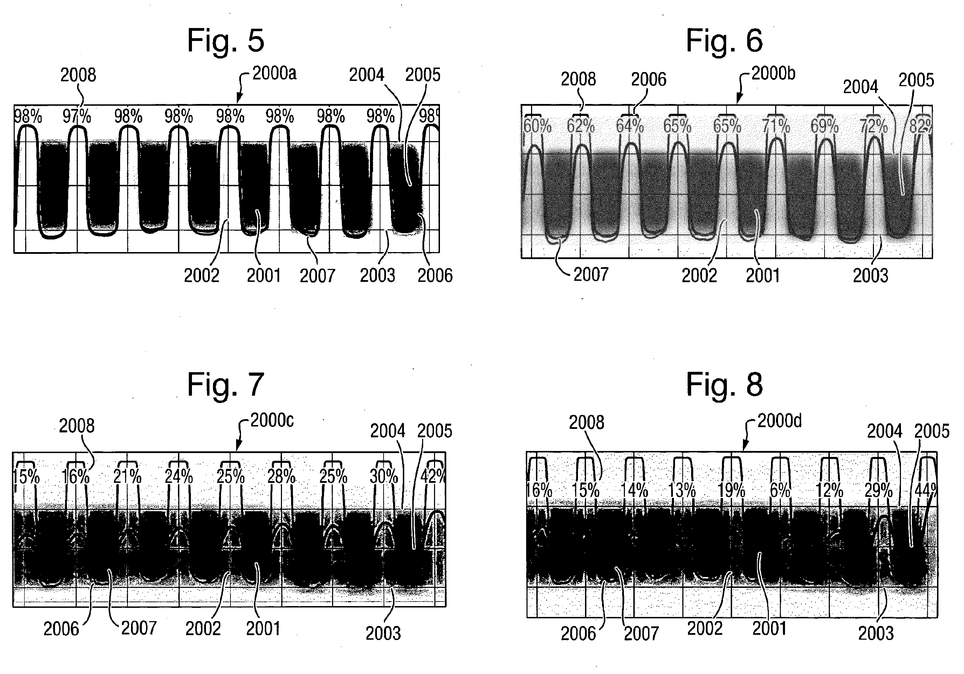

Figures 5 to 8 depict measurement images taken from a series of drums having different amounts of wear. In Figures 5 to 8 the measurement image itself comprises a series of bright bars 2001 on a dark background 2002. Superimposed on these images are lines that are constructed in an embodiment of the invention (described further below) to derive a numerical indication of wear or damage to the photoconductor. The construction lines include straight horizontal lines 2003 and 2004 which mark the outer bounds of the image region which is processed in the embodiment of the invention. These lines run across the ends of the bright bars. Also shown is a center line 2005 which is geometrically centered between lines 2003 and 2004. Also shown are curved lines 2006, 2007 which represent the average intensity of vertical rows of pixels between the boundary lines 2003, 2004. Line 2006 represents the measurement results from a "known good" photoconductor used for reference and calibration purposes. Line 2007 represents the measurement results from the photoconductor under test. Finally, numerical values 2008 represent the reflection integrity of each dark band within the measurement image.

The depicted orientation of the images is arbitrary and the use of terms "horizontal" and "vertical" and the like is not intended to indicate any necessary orientation of the apparatus 1000 or the photoconductor 401. In the example images, the bright bars of the contrasting pattern are perpendicular to the axis of the photoconductor, which is cylindrical. Thus the direction of the images which is referred to as horizontal herein is parallel to the axis of the photonconductor.

Figure 5 is a measurement image 2000a taken from a near perfect photoconductor. It can be seen that the contrast between the dark regions of the image and the bright regions is high. This indicates that little light is being scattered from the surface of the photoconductor drum and the amount of specular reflection is almost 100%. In the example shown the measured reflection integrity is 98% and the process for deriving this value is described further below.

Figure 6 illustrates a measurement image 2000 taken from a partly worn drum but one which is still suitable for re-use. This has a reflection integrity as determined by the process of the present invention of 68% and is deemed a pass.

Figure 7 depicts a measurement image taken from a drum which has more wear and this provides an average reflection integrity of 25% with a minimum of 15%. This is still deemed a pass but is close to the limit.

Figure 8 depicts a measurement image from a highly worn drum with a reflection integrity of only 19% and a minimum reflection integrity of 6%. This is regarded as a fail and the drum in question is not suitable for re-use.

By comparing Figures 5 to 8 it can be seen that as the amount of wear of the drums increases, the amount of light in the regions that should be dark increases. This results from a decrease in specular reflection from the drum and an increase in scattering of the light incident thereon.

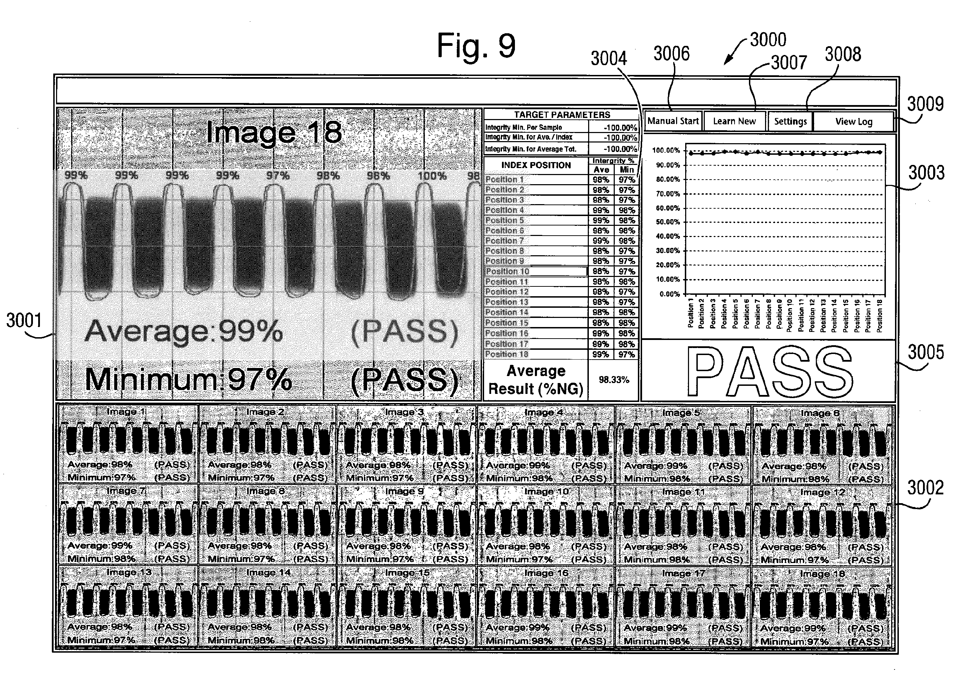

Figure 9 depicts a display of a user interface 3000 of an inspection apparatus according to an embodiment of the present invention. In a first area the user interface displays a measurement image 3001 of the current inspection region overlaid with markers relating to calculation of the measurement parameters as described above. In a second area 3002, the user interface displays smaller versions of the measurement images previously taken from other regions of the photoconductor 401. A third area summarises the measurement results in both tabular 3004 and graphic 3003 forms as well as the overall conclusion 3005 as to whether the photoconductor 401 passes or fails its inspection. Variations on the form of the interface are of course possible; at a minimum the user interface merely needs to display, or communicate by other means such as a buzzer, whether the photoconductor 401 passes or fails inspection.

Control buttons 3006-3009, e.g. virtual buttons on a touch screen, are provided. These can include: a start button 3006 to start a scan; a learn button 3007 to start a learning process to derive thresholds from known-good and/or limit samples; a settings button 3008 to display a menu to allow settings and parameters of the machine to be changed; and a log button 3009 to display a log of activities carried out by the apparatus.

In an embodiment of the invention, to pass overall, measurements at each inspection region of the photoconductor must pass; any single failure is considered a failure of the photoconductor as a whole. In an embodiment of the present invention, the inspection process terminates as soon as any given inspection region records a fail rating.

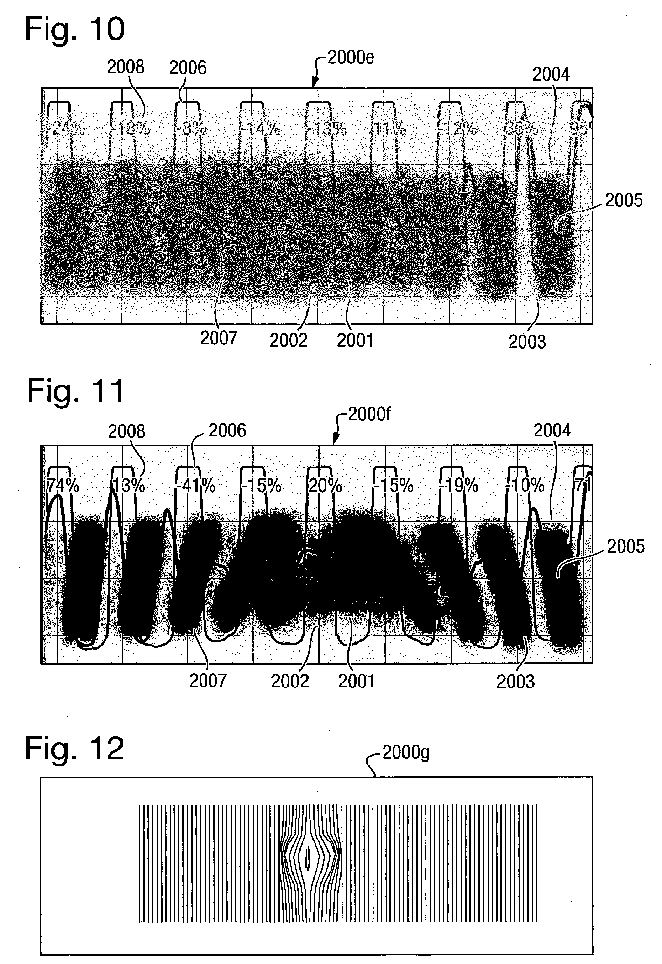

The inspection method and apparatus of the present invention can also be used to detect other forms of damage to a photoconductor than circumferential scratches. Figure 10 illustrates a measurement image 2000e taken from a photoconductor with serious localised damage, e.g. from repeated use with non-standard paper sizes. This may occur in label-printing applications. Without modification, the apparatus and method of the present invention detect such damage.

Figure 11 depicts a measurement image 2000f taken from a photoconductor drum with little scratch damage but a small dent. It will be seen that the dent distorts the pattern of contrasting regions sufficiently that the photoconductor drum fails the inspection method of the present invention.

Figure 12 is a simulated image 2000g of a measurement system according to the present invention in which the spatial frequency of the pattern of contrasting regions is reduced, i.e. the bright areas are made smaller and close together. Such a method allows detection of a smaller surface imperfection through its distorting effect on the reflected pattern.

Localised change such as dents or imperfections do not always extend around the circumference of the photoconductor. Therefore to detect such damage it is desirable to rotate the photoconductor as well as translate it relative to the optical unit and to cover its entire surface during inspection.

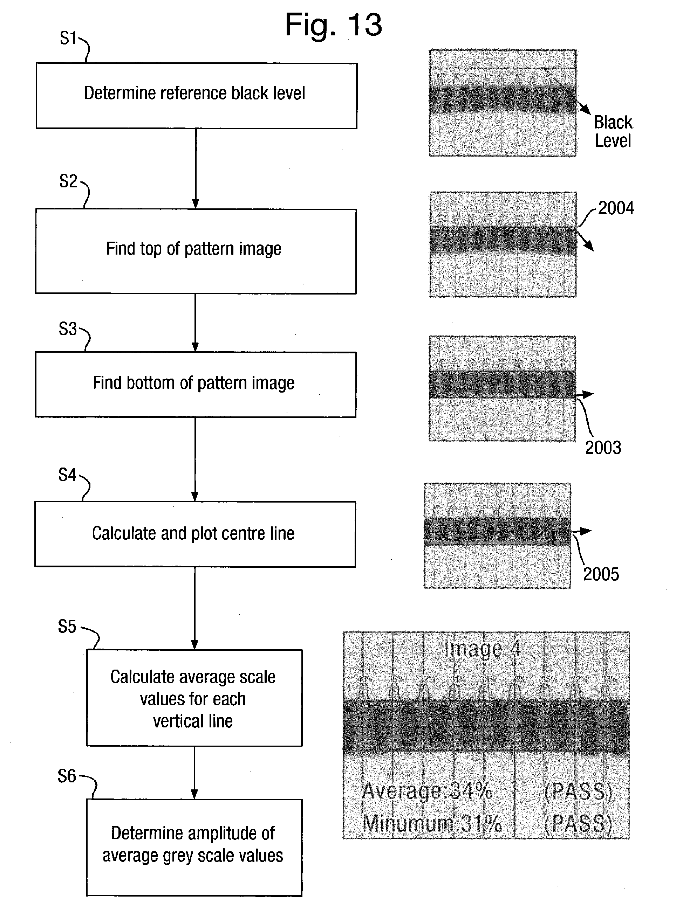

Figure 13 depicts in detail an image processing method according to an embodiment of the invention to derive a measurement value indicative of the reflectance of the photoconductor.

The first step is a calibration step S 1 to determine a reference black level for use in subsequent calculations. In this step an average pixel value is calculated from a region of the captured image known to be remote from the image of the pattern. In an example image of 480 pixels by 640 pixels, a region 20 pixels wide adjacent an edge of an image is used. In an embodiment a part of the image known to contain an image of a reference board may be used.

The second step is to find S2 a first, e.g. top, edge of the contrasting pattern in the image. In an embodiment, this is performed by calculating the average pixel value of lines of pixels parallel to the pattern image until the first line moving away from an edge of the image has an average pixel value greater than the reference black level by a predetermined amount.

In step S3 the same process is repeated for lines moving up from the bottom of the image to find the other, e.g. bottom, edge of the pattern image.

In an embodiment of the present invention the image being processed is displayed to the operator and lines 2003, 2004 indicating the top and bottom of the track image are superimposed thereon on the display so that the operator can recognise that the method is operating correctly. In such an embodiment, the center line 2005 of the pattern image is calculated and displayed to the operator in step S4.

In step S5 an average luminance value is calculated for each vertical line of pixels between the top and bottom lines. For operator verification, these average values are plotted centered on the center line 2005.

In the final step of this method S6, a determination of whether or not the image passes is determined from the amplitude of the set of average values calculated in step S5. This amplitude can be calculated in several ways, e.g. by comparing highest and lowest values across all peaks or selected peaks. Values at specific positions known to fall within bright and dark areas can also be compared.

Other methods for determining the specular reflectance from an image of a contrasting pattern can also be used. Suitable methods include pattern recognition algorithms and methods based on examining histograms (counts of pixels with particular luminance values).

The present invention has been described above with reference with exemplary embodiments thereof. However, the above embodiments should not be read as limiting the scope of the present invention, which is defined solely by the appended claims. Variations to the described embodiments are possible. For example, the present invention may be applied to multicoloured image forming apparatus having multiple separate photoconductor unit. The present invention can also be applied to photoconductors of other forms than cylindrical drums, e.g. flexible belts, and to other parts in the paper path of an image forming device, such as fixing drums, development rollers and turn shafts.

## Claims

1. A method for inspecting a photoconductor member (401), the method comprising:
directing a patterned light beam onto the photoconductor member (401) so that it reflects therefrom to form a reflected beam;
detecting the reflected beam; and
deriving a measurement of the specular reflectance of the photoconductor member (401) from the reflected beam; **characterised in that**:
the patterned light beam comprises a plurality of dark portions and a plurality of light portions;
deriving a measurement of the specular reflectance comprises capturing an image of the photoconductor member with an imaging device; and
comparing the intensities of portions of the image respectively corresponding to the dark portions and the light portions.

2. A method according to claim 1 wherein deriving a measurement of the specular reflectance comprises comparing pixel values for the dark and light portions respectively.

3. A method according to claim 2 wherein comparing pixel values comprising comparing averages of pixel values from the dark and light portions.

4. A method according to any one of the preceding claims further comprising deriving a measurement of the specular reflectance of a plurality of regions of the photoconductor member.

5. A method according to any one of the preceding claims further comprising comparing the measurement of the specular reflectance to a threshold.

6. Apparatus for inspecting a photoconductor member (401), the apparatus comprising:
a light source (1001) for emitting a light beam;
a mask (1002);
a holder (1006) for holding the photoconductor member (401); **characterised in that**:
the mask is for selectively masking part of the light beam for a plurality of light regions and a plurality of dark regions; and by
an imaging device (1003) for capturing a measurement image of the mask reflected in the surface of the photoconductor; and
an image processor for processing the measurement image to derive a value indicative of the specular reflectance of the photoconductor, wherein the image processor comprises a comparator for comparing pixel values from a part of the image corresponding to a light region and a part of the image corresponding to a dark region.

7. Apparatus according to claim 6 wherein the comparator compares averages of pixel values.

8. Apparatus according to claims 6 or 7 further comprising a driver (1007) for relatively moving the holder (1006) and a unit comprising the light source (1001), the mask (1002) and the imaging device (1003).

9. Apparatus according to any one of claims 6 to 8 wherein the mask comprises plurality of elongate apertures in an opaque member.

10. A computer program for processing an image of a mask reflected in a photoconductor to derive a measurement of the specular reflectance thereof, the program comprising code means that, when executed by a computer, instruct the computer to:
locate boundaries of the image of the mask in an image captured by an imaging device;
determine average luminance values of lines of pixels, the lines of pixels being parallel and extending between the boundaries; and
compare average luminance values driving from areas of the image corresponding to bright parts of the mask and average luminance values deriving from areas of the image corresponding to dark parts of the mask.

11. A computer program according to claim 10 further comprising code means for instructing the computer to:
process one or more images derived from one or more reference photoconductors to derive at least one calibration value.

## Patentansprüche

1. Verfahren zum Prüfen eines Photoleiterelements (401), wobei das Verfahren Folgendes umfasst:
Richten eines gemusterten Lichtstrahls auf das Photoleiterelement (401), so dass er davon reflektiert wird, um einen reflektierten Strahl zu bilden;
Detektieren des reflektierten Strahls und
Ableiten einer Messung der spiegelnden Reflexion des Photoleiterelements (401) aus dem reflektierten Strahl; **dadurch gekennzeichnet, dass**:
der gemusterte Lichtstrahl mehrere dunkle Abschnitte und mehrere helle Abschnitte umfasst;
das Ableiten einer Messung der spiegelnden Reflexion das Aufnehmen eines Bildes des Photoleiterelements mit einer Bilderzeugungsvorrichtung umfasst; und durch
das Vergleichen der Intensitäten der Abschnitte des Bildes, die jeweils den dunklen Abschnitten und den hellen Abschnitten entsprechen.

2. Verfahren nach Anspruch 1, wobei das Ableiten einer Messung der spiegelnden Reflexion das Vergleichen der Pixelwerte jeweils für die dunklen und hellen Abschnitte umfasst.

3. Verfahren nach Anspruch 2, wobei das Vergleichen der Pixelwerte das Vergleichen der Mittelwerte der Pixelwerte von den dunklen und den hellen Abschnitten umfasst.

4. Verfahren nach einem der vorhergehenden Ansprüche, das ferner das Ableiten einer Messung der spiegelnden Reflexion mehrerer Gebiete des Photoleiterelements umfasst.

5. Verfahren nach einem der vorhergehenden Ansprüche, das ferner das Vergleichen der Messung der spiegelnden Reflexion mit einem Schwellenwert umfasst.

6. Einrichtung zum Prüfen eines Photoleiterelements (401), wobei die Einrichtung Folgendes umfasst:
eine Lichtquelle (1001) zum Emittieren eines Lichtstrahls;
eine Blende (1002);
einen Halter (1006) zum Halten des Photoleiterelements (401); **dadurch gekennzeichnet, dass**:
die Blende dazu dient, einen Teils des Lichtstrahls für mehrere helle Gebiete und mehrere dunkle Gebiete auszublenden und durch
eine Bilderzeugungsvorrichtung (1003) zum Aufnehmen eines Messbildes der Blende, das von der Oberfläche des Photoleiters reflektiert wird, und
einen Bildprozessor zum Verarbeiten des Messbildes, um einen Wert abzuleiten, der die spiegelnde Reflexion des Photoleiters anzeigt, wobei der Bildprozessor einen Komparator zum Vergleichen der Pixelwerte von einem Teil des Bildes, der einem hellen Gebiet entspricht, und einem Teil des Bildes, der einem dunklen Gebiet entspricht, umfasst.

7. Einrichtung nach Anspruch 6, wobei der Komparator Mittelwerte von Pixelwerten vergleicht.

8. Einrichtung nach Anspruch 6 oder 7, die ferner einen Antriebsteil (1007) für das relative Bewegen des Halters (1006) und einer Einheit umfasst, die die Lichtquelle (1001), die Blende (1002) und die Bilderzeugungsvorrichtung (1003) umfasst.

9. Einrichtung nach einem der Ansprüche 6 bis 8, wobei die Blende mehrere längliche Öffnungen in einem undurchsichtigen Element umfasst.

10. Computerprogramm zum Verarbeiten eines Bildes einer Blende, das von einem Photoleiter reflektiert wird, um eine Messung der spiegelnden Reflexion davon abzuleiten, wobei das Programm Codemittel umfasst, die dann, wenn sie durch einen Computer ausgeführt werden, den Computer anweisen:
Grenzen des Bildes der Blende in einem Bild, das durch eine Bilderzeugungsvorrichtung aufgenommen wird, zu ermitteln;
durchschnittliche Leuchtdichtenwerte von Linien der Pixel zu bestimmen, wobei die Linien der Pixel parallel sind und sich zwischen den Grenzen erstrecken, und
durchschnittliche Leuchtdichtenwerte, die sich aus Bereichen des Bildes ableiten, die den strahlenden Teilen der Blende entsprechen, und durchschnittliche Leuchtdichtenwerte, die sich aus Bereichen des Bildes ableiten, die dunklen Teilen der Maske entsprechen, zu vergleichen.

11. Computerprogramm nach Anspruch 10, das ferner Codemittel umfasst, um den Computer anzuweisen:
ein oder mehrere Bilder, die von einem oder mehreren Referenzphotoleitern abgeleitet sind, zu verarbeiten, um mindestens einen Kalibrierwert abzuleiten.

## Revendications

1. Procédé pour inspecter un élément photoconducteur (401), le procédé comprenant les étapes consistant à :
diriger un faisceau lumineux modelé sur l'élément photoconducteur (401) de sorte qu'il se réfléchit à partir de ce dernier afin de former un faisceau réfléchi ;
détecter le faisceau réfléchi ; et
dériver une mesure de la réflexion spéculaire de l'élément photoconducteur (401) à partir du faisceau réfléchi; **caractérisé en ce que** :
le faisceau lumineux modelé comprend une pluralité de parties sombres et une pluralité de parties claires ;
dériver une mesure de la réflexion spéculaire comprenant l'étape consistant à capturer une image de l'élément photoconducteur avec un dispositif d'imagerie ; et
comparer les intensités des parties de l'image correspondant respectivement aux parties sombres et aux parties claires.

2. Procédé selon la revendication 1, dans lequel l'étape consistant à dériver une mesure de la réflexion spéculaire comprend l'étape consistant à comparer les valeurs de pixel pour les parties claires et sombres, respectivement.

3. Procédé selon la revendication 2, dans lequel l'étape consistant à comparer des valeurs de pixel comprend l'étape consistant à comparer les moyennes des valeurs de pixel des parties sombres et claires.

4. Procédé selon l'une quelconque des revendications précédentes, comprenant en outre l'étape consistant à dériver une mesure de la réflexion spéculaire d'une pluralité de régions de l'élément photoconducteur.

5. Procédé selon l'une quelconque des revendications précédentes, comprenant en outre l'étape consistant à comparer la mesure de la réflexion spéculaire à un seuil.

6. Appareil pour inspecter un élément photoconducteur (401), l'appareil comprenant :
une source de lumière (1001) pour émettre un faisceau lumineux ;
un masque (1002) ;
un support (1006) pour maintenir l'élément photoconducteur (401) ; **caractérisé en ce que** :
le masque est prévu pour masquer sélectivement la partie du faisceau lumineux pour une pluralité de régions claires et une pluralité de régions sombres ; et par :
un dispositif d'imagerie (1003) pour capturer une image de mesure du masque réfléchie dans la surface du photoconducteur ; et
un processeur d'image pour traiter l'image de mesure afin de dériver une valeur indicative de la réflexion spéculaire du photoconducteur, dans lequel le processeur d'image comprend un comparateur pour comparer des valeurs de pixel d'une partie de l'image correspondant à une région claire et une partie de l'image correspondant à une région sombre.

7. Appareil selon la revendication 6, dans lequel le comparateur compare des moyennes des valeurs de pixel.

8. Appareil selon les revendications 6 ou 7, comprenant un dispositif d'entraînement (1007) pour déplacer relativement le support (1006) et une unité comprenant la source de lumière (1001), le masque (1002) et le dispositif d'imagerie (1003).

9. Appareil selon l'une quelconque des revendications 6 à 8, dans lequel le masque comprend une pluralité d'ouvertures allongées dans un élément opaque.

10. Programme informatique pour traiter une image d'un masque réfléchie dans un photoconducteur pour dériver une mesure de sa réflexion spéculaire, le programme comprenant des moyens de code qui, lorsqu'ils sont exécutés par un ordinateur, chargent l'ordinateur de :
localiser les limites de l'image du masque dans une image capturée par un dispositif d'imagerie ;
déterminer des valeurs de luminance moyenne des lignes de pixels, les lignes de pixels étant parallèles et s'étendant entre les limites ; et
comparer les valeurs de luminance moyennes provenant des zones de l'image correspondant aux parties claires du masque et des valeurs de luminance moyennes provenant des zones de l'image correspondant aux parties sombres du masque.

11. Programme informatique selon la revendication 10, comprenant en outre des moyens de code pour charger l'ordinateur de :
traiter une ou plusieurs images dérivées d'un ou de plusieurs photoconducteurs de référence afin de dériver au moins une valeur de calibrage.
